# FASCICULE DE BREVET EUROPEEN

(11) **EP 3 549 822 B1**
(45) Date de publication et mention de la délivrance du brevet: **15.06.2022**
(21) Numéro de dépôt: 19163860.0
(22) Date de dépôt: 19.03.2019
(51) Int. Cl.: B60Q 1/00, B60Q 1/26, F21S 43/14, F21S 43/20, F21S 43/50, B60R 1/12, B60R 13/04, G09F 13/22, B60Q 1/50, G09F 9/302, F21V 11/14, F21W 104/00, G09F 21/04

(54) **ÉLÉMENT DE CARROSSERIE À ÉCLAIRAGE INTÉGRÉ POUR VÉHICULE AUTOMOBILE ET VÉHICULE POURVU DUDIT ÉLÉMENT**
KARROSSERIETEIL FÜR KRAFTFAHRZEUGE MIT EINER INTEGRIERTEN LEUCHTVORRICHTUNG UND FAHRZEUG MIT EINEM SOLCHEN KARROSSERIETEIL.
CAR BODY PART WITH AN EMBEDDED LIGHTING DEVICE FOR A MOTOR VEHICLE AND MOTOR VEHICLE COMPRISING SAID CAR BODY PART

(30) Priorité: 04.04.2018 FR 1852921
(43) Date de publication de la demande: 09.10.2019
(73) Titulaire: PSA Automobiles SA, 78300 Poissy (FR)
(72) Inventeur: DEGUINES, Bertrand, 78540 VERNOUILLET (FR); BREVET, Richard, 92400 COURBEVOIE (FR); MOYNIER, Gilles, 72000 LE MANS (FR)

(56) Documents cités:
- EP-A1- 2 869 676
- DE-A1-102012 003 200
- JP-U- S6 429 049
- US-A- 5 604 480
- US-A1- 2017 313 243
- US-A1- 2018 050 632

## Description

L'invention concerne un élément de carrosserie de véhicule automobile à éclairage intégré et un véhicule pourvu dudit élément.

Plus particulièrement, l'invention s'intéresse à des moyens intégrés à la carrosserie et permettant une diffusion signalétique de lumière ou une illumination selon différents modes d'éclairage.

### ÉTAT DE LA TECHNIQUE ANTÉRIEURE

Il existe déjà de nombreux dispositifs d'éclairage et/ou de signalisation équipant des véhicules automobiles. Les documents US 2017/313243 A1 et DE 10 2012 003200 A1 décrivent de tels dispositifs.

Ces dispositifs qui sont obligatoires, comprennent généralement une source lumineuse (lampe à incandescence, LED, xénon, ...) logée dans un compartiment intérieur de la carrosserie qui est isolé de l'extérieur par une paroi de matériau transparent ou translucide. De tels dispositifs d'éclairage sont destinés, notamment, à servir de phares ou de projecteurs (feux de route, de croisement, de position, feux arrière, clignotants, avertisseur de freinage, ...).

Le design automobile vise aujourd'hui à intégrer totalement les dispositifs d'éclairage dans les profils de carrosserie et, dans cette perspective, les projecteurs ou feux des véhicules automobiles sont réalisés par assemblage de plusieurs pièces réalisées séparément par moulage à injection. Les formes de ces pièces sont propres à chaque modèle de véhicule ou à chaque constructeur et certaines d'entre elles sont pourvues d'une couche superficielle de métallisation, comme décrit dans les documents FR 3 013 739 et FR 3 036 633.

Dans le document EP2746106 il est prévu que la lumière provenant de la source lumineuse ne soit projetée qu'au travers d'une zone transparente située sélectivement sur la paroi du couvercle du dispositif d'éclairage tandis que les autres zones sont opaques et/ou présentent des propriétés d'occultation.

Le EP952388 décrit un feu arrière de véhicule automobile dont le couvercle est pourvu d'un revêtement en plusieurs couches d'un revêtement de couleur rouge dont les propriétés de diffusion de la lumière sont adaptées à chaque fonction du dispositif d'éclairage.

Dans le US 4 855 877, le dispositif d'éclairage du feu arrière comprend plusieurs compartiments juxtaposés renfermant chacun au moins une source lumineuse. Ce dispositif est obturé par un couvercle formé de l'assemblage d'une pièce intérieure et d'une pièce extérieure comportant une zone transparente et une zone présentant une alternance de rayures transparentes et opaques de couleurs différentes.

Toutefois, les récentes évolutions du style consistent à intégrer sur certaines parties de la carrosserie, à des fins esthétiques ou fonctionnelles, des moyens d'affichage d'une signalétique lumineuse dont les aspects sont variables tant en couleurs qu'en géométries.

Or, la structure des moyens d'éclairage connus n'est pas adaptée à cet objectif car ces moyens ne sont conçus et dédiés qu'à la projection de lumière sur la trajectoire du véhicule ou à la signalisation de sa direction ou de sa situation.

En outre, pour des raisons réglementaires, les dispositifs d'éclairage connus sont destinés à être montés en des emplacements précis de la carrosserie ce qui ne correspond pas aux projets actuels et à venir.

### EXPOSÉ DE L'INVENTION

La présente invention a pour but de résoudre les problèmes techniques posés par l'art antérieur en proposant un élément de carrosserie perfectionné qui est pourvu de moyens diffusant un éclairage signalétique ou affichant une illumination, éventuellement, variable tant en couleurs qu'en géométries.

Le perfectionnement de l'invention permet de concilier ainsi tant les attentes de style en termes d'aspect visuel et d'intégration esthétique dans le véhicule que les besoins fonctionnels de présentation d'informations.

Ce but est atteint, selon l'invention, au moyen d'un élément de carrosserie de véhicule automobile comprenant une paroi comportant sur sa première face, des zones de diffusion diffusant la lumière émise par au moins une source lumineuse disposée en regard de la première face i ; ladite paroi comportant en outre, sur sa deuxième face, des zones d'occultation de la lumière, caractérisé en ce que lesdites zones d'occultation sont séparées par des espaces intercalaires formant lesdites zones de diffusion de la lumière.

Selon l'invention, les zones d'occultation forment des pavés opaques.

Les pavés formant les zones d'occultation sont reliés par des pontets.

Les zones de diffusion de la lumière sont situées sur une nappe translucide formant la face intérieure de la paroi.

Enfin, selon l'invention, la paroi est constituée de l'assemblage des pavés opaques sur la nappe translucide.

De préférence, les pavés opaques portent des picots destinés à assurer leur ancrage par « bouterollage » au travers de la nappe translucide.

Selon une autre caractéristique, les espaces intercalaires formant les zones de diffusion de la lumière sont constitués de fentes.

Selon une variante spécifique de l'élément de carrosserie de l'invention, les espaces intercalaires formant les zones de diffusion sont pourvus chacun d'une source lumineuse en vis-à-vis.

De préférence, ces sources lumineuses sont des Leds dites rouge vert bleu (RVB) pilotées chacune de façon indépendante par un microprocesseur de façon à créer une signature lumineuse.

Selon encore une autre variante de l'invention, les zones d'occultation sont pourvues d'un revêtement métallisé.

Un autre objet de l'invention est un véhicule automobile pourvu ou construit avec au moins un élément de carrosserie présentant les caractéristiques définies ci-dessus.

Le signal lumineux affiché sur l'élément de carrosserie de l'invention peut être variable pour s'adapter aux besoins (feux indicateurs de direction ; feux de circulation diurne; lanternes) et se déplacer de façon commandée et sélective dans les espaces intercalaires de diffusion de la lumière ménagées entre les zones d'occultation.

Du fait de la finesse de ces espaces de diffusion, l'élément de carrosserie de l'invention permet de présenter une signature lumineuse unique et originale dont les dimensions sont inférieures à celles permises par un dispositif d'éclairage standard et qui sont donc compatibles avec la réglementation en vigueur.

Grâce au pilotage indépendant des sources lumineuses en intensités, en couleurs et en fréquences, l'invention offre, en outre, la possibilité de changer de motif lumineux selon la phase de roulage, le type et la gamme de véhicule et pendant toute la durée de vie de celui-ci.

Enfin, le mode de réalisation de l'invention consistant en l'assemblage du pavage occultant rapporté sur la nappe translucide permet une gestion facile du procédé industriel de fabrication de cet élément de carrosserie, notamment, par moulage à injection de matières plastiques.

En particulier, le traitement à des fins esthétiques de la surface des zones d'occultation apparentes peut aller, en partant de la teinte originale de la matière première, au chromage dur au moyen d'une opération d'hydro-transfert, de transfert thermique ou bien de peinture sans avoir recours à un masquage des autres parties de la carrosserie.

En outre, grâce à sa structure simple et à sa présentation évolutive, l'élément de l'invention peut s'intégrer de façon compacte et esthétique dans tous les styles de carrosserie des véhicules automobiles sans créer de rupture de lignes.

Ainsi, l'élément de carrosserie perfectionné selon l'invention peut former toute ou partie de la carrosserie d'un véhicule automobile, tel qu'un bouclier avant ou arrière, un flanc de portière, un capot, etc ..., ou bien être intégré ultérieurement dans un véhicule par découpe, insertion et fixation sur la carrosserie.

En adaptant les caractéristiques de la source lumineuse et celles des zones de diffusion de la lumière, l'élément de carrosserie de l'invention peut aussi être utilisé comme un dispositif d'éclairage ou de signalisation réglementaire.

### BRÈVE DESCRIPTION DES FIGURES

D'autres caractéristiques et avantages de l'invention ressortiront à la lecture de la description qui va suivre, en référence aux figures annexées et détaillées ci-après.
La figure 1 représente une vue de face d'un mode de réalisation d'un élément de carrosserie selon l'invention.
Les figures 2A et 2B représentent des vues en coupe partielle, respectivement, de face et de dos du mode de réalisation de l'élément de carrosserie de la figure 1.
Les figures 3A à 3F représentent une vue de face de l'élément de carrosserie de la figure 1 dans différentes configurations d'illumination.

Pour plus de clarté, les éléments identiques ou similaires sont repérés par des signes de référence identiques sur l'ensemble des figures.

### DESCRIPTION DÉTAILLÉE DE MODES DE REALISATION

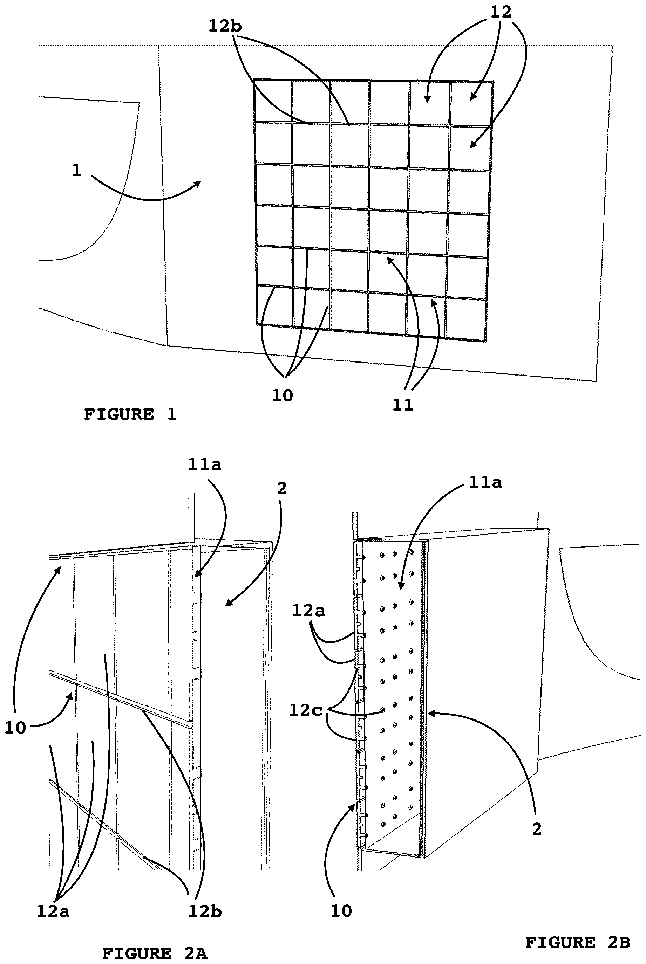

Naturellement, les modes de réalisation illustrés par les figures présentées ci-dessus et décrits ci-après ne sont donnés qu'à titre d'exemples non limitatif. Les figures 1, 2A et 2B représentent un mode de réalisation de l'élément de carrosserie de l'invention qui comporte des moyens d'éclairage ou d'illumination intégrés. Ces moyens d'éclairage comprennent une paroi 1 et un compartiment 2 (Fig. 2A et 2B) ; la paroi 1 obturant le compartiment 2.

La paroi 1 comporte une face dite extérieure et une face intérieure. Par face extérieure, on entend la face qui est visible de l'extérieur du véhicule et par face intérieure, la face non visible qui en regard du compartiment 2. Le compartiment 2 renferme une boîte à lumière, comprenant au moins une source lumineuse (non représentée) disposée, au moins partiellement, en regard de la face intérieure de la paroi 1.

Sur la paroi 1 sont délimitées des zones 11 de diffusion de la lumière émise par la source lumineuse et des zones 12 d'occultation de la lumière. Les zones de diffusion 11 et les zones d'occultation 12 peuvent présenter différentes formes et géométries, selon diverses variantes de l'invention.

Les zones d'occultation 12 sont séparées par des espaces intercalaires 10 formant les zones de diffusion 11 de la lumière depuis le compartiment 2 vers l'extérieur. Ainsi, un observateur extérieur ne voit la lumière émise par la source lumineuse qu'au travers des zones de diffusion 11.

Dans le mode de réalisation représenté sur les figures annexées, les zones d'occultation 12 sont matérialisées par des pavés opaques 12a rapportés sur la face extérieure de la paroi 1 et reliés par des pontets 12b de très faibles dimensions. Ces pontets 12b assurent la liaison mécanique entre les pavés 12a de façon à constituer un pavage en une seule pièce qui peut être réalisée, par exemple, par moulage à injection d'une matière plastique ou thermoplastique (polypropylène, ....).

Les zones de diffusion 11 de la lumière sont réalisées à partir d'une nappe translucide 11a formant la face intérieure de la paroi 1 et sont délimitées entre les pavés 12a. Cette paroi est constituée de l'assemblage du pavage opaque 12a sur la nappe translucide 11a. Les espaces 10 entre les pavés 12a qui forment les zones de diffusion 11 de la lumière sont alors constitués ici de fentes étroites et étanches.

La fixation du pavage opaque 12a sur la nappe translucide 11a est réalisée par placage et introduction puis ancrage de picots 12c portés par la face interne du pavage opaque 12a dans des orifices ménagés au travers de la nappe translucide 11a. Cette opération dite de « bouterollage » est assimilable à un rivetage et consiste à écraser, éventuellement par chauffage et sous pression, les extrémités ou têtes des picots 12c qui font saillie sur la face interne de la nappe 11a pour solidariser le pavage 12a de façon étanche.

Selon un autre mode de réalisation non représenté et non couvert par la revendication indépendante, le pavage opaque et la nappe translucide pourraient être réalisés par une opération unique de surmoulage en ménageant des espaces libres intercalaires entre les pavés.

Selon encore un autre mode de réalisation, les zones de diffusion de la lumière sont réalisées par gravure de la paroi 1 au travers du pavage extérieur opaque jusqu'à atteindre la nappe 11a. Le cas échéant, les zones 12 d'occultation de la lumière peuvent être pourvues d'un revêtement métallisé dont la teinte est identique à celle de la carrosserie du véhicule.

Selon une variante préférentielle de l'invention, les espaces intercalaires 10 formant les fentes de diffusion de la lumière entre les pavés 12a d'occultation, sont pourvus chacun d'une source lumineuse en vis-à-vis (non représentées). Ces sources lumineuses sont avantageusement constituées de diodes ou de Leds RVB pilotées chacune et de façon indépendante par un microprocesseur et dont la mise en œuvre est automatique ou commandée par le conducteur.

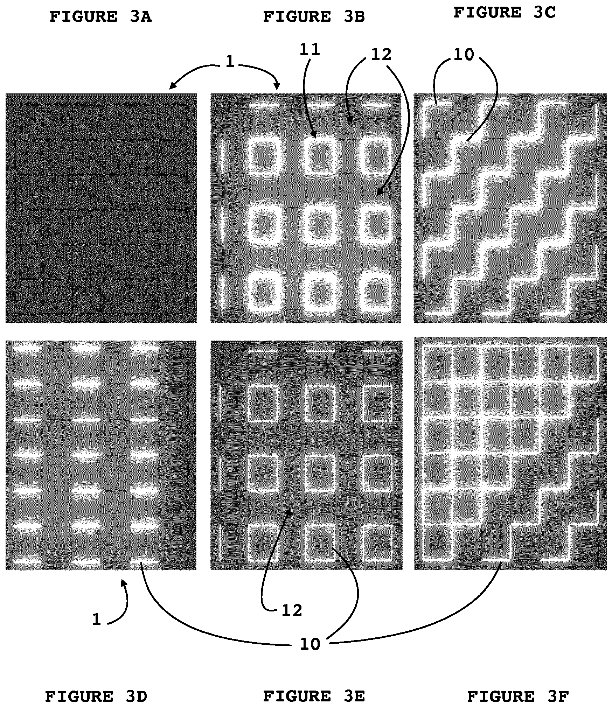

Ainsi, l'illumination des fentes 10 peut être effectuée selon un programme pré-déterminé avec des variations d'intensités, de couleurs, de cinématique et de positions sur l'élément de carrosserie de l'invention, à partir d'une situation de repos sans illumination (figure 3A) et selon différents schémas, comme illustré par les figures 3B à 3F de façon à créer une signature lumineuse, fixe, intermittente, défilante ou plus généralement mobile et se déplaçant sur le réseau des fentes 10.

Dans le cas où le pavage opaque occultant 12a est constitué de pavés carrés ou rectangulaires, les fentes étroites 10 s'étendent alors selon des directions sensiblement verticales et horizontales ce qui permet un affichage lumineux de caractères typographiques du type « bâton » à la manière des écrans digitaux.

Toutefois et sans sortir du cadre de l'invention, il est possible de prévoir que les zones d'occultation de la lumière puissent être constituées de pavés dont les géométries respectives sont différentes d'un pavé à l'autre et qui délimitent entre eux des espaces intercalaires de diffusion de la lumière dont les dimensions ne sont pas uniformes sur l'ensemble de l'élément de carrosserie.

L'invention concerne également un véhicule automobile pourvu ou construit à partir d'au moins un élément de carrosserie présentant les caractéristiques décrites ci-dessus.

## Revendications

1. Élément de carrosserie de véhicule automobile comprenant une paroi (1) comportant sur sa première face des zones de diffusion (11) diffusant la lumière émise par au moins une source lumineuse disposée en regard de la première face, ladite paroi (1) comportant en outre, sur sa deuxième face, des zones d'occultation (12) de la lumière, lesdites zones d'occultation (12) étant séparées par des espaces intercalaires (10) configurés pour laisser diffuser la lumière émise par ladite source lumineuse, lesdites zones d'occultation (12) formant des pavés opaques (12a), lesdites zones de diffusion (11) de la lumière étant réalisées à partir d'une nappe translucide (11a) formant la face intérieure de ladite paroi (1)
**caractérisé en ce que**
lesdits pavés (12a) formant les zones d'occultation (12), sont reliés par des pontets (12b), ladite paroi (1) étant constituée de l'assemblage des pavés opaques (12a) sur la nappe translucide (11a).

2. Élément de carrosserie selon la revendication précédente, **caractérisé en ce que** lesdits pavés opaques (12a) portent des picots (12c) destinés à assurer leur ancrage par bouterollage au travers de la nappe translucide (11a).

3. Élément de carrosserie selon l'une des revendications précédentes, **caractérisé en ce que** les espaces intercalaires (10) formant les zones de diffusion (11) de la lumière sont constitués de fentes.

4. Élément de carrosserie selon l'une des revendications précédentes, **caractérisé en ce que** lesdits espaces intercalaires (10) formant les zones de diffusion (11) sont pourvus chacun d'une source lumineuse en vis-à-vis.

5. Élément de carrosserie selon la revendication précédente, **caractérisé en ce que** les sources lumineuses sont des Leds RVB pilotées chacune de façon indépendante par un microprocesseur de façon à créer une signature lumineuse.

6. Véhicule automobile pourvu d'au moins un élément de carrosserie selon l'une des revendications précédentes.

## Patentansprüche

1. Karosserieelement für ein Kraftfahrzeug mit einer Wand (1), die auf ihrer ersten Seite Diffusionszonen (11) aufweist, die das von mindestens einer gegenüber der ersten Seite angeordneten Lichtquelle ausgesandte Licht streuen, wobei die Wand (1) außerdem auf ihrer zweiten Seite Lichtabschirmungszonen (12) aufweist, wobei die Abschirmungszonen (12) durch Zwischenräume (10) getrennt sind, die so gestaltet sind, dass sie das von der Lichtquelle ausgesandte Licht streuen lassen, wobei die Verdeckungszonen (12) lichtundurchlässige Pflastersteine (12a) bilden, wobei die Lichtdiffusionszonen (11) ausgehend von einer lichtdurchlässigen Bahn (11a) realisiert werden, die die Innenseite der Wand (1) bildet, **dadurch gekennzeichnet, dass** die Pflastersteine (12a), die die Verdeckungszonen (12) bilden, durch Brücken (12b) verbunden sind, wobei die Wand (1) aus dem Zusammenbau der lichtundurchlässigen Pflastersteine (12a) auf der lichtdurchlässigen Bahn (11a) besteht.

2. . Karosserieelement nach dem vorhergehenden Anspruch, **dadurch gekennzeichnet, dass** die lichtundurchlässigen Pflastersteine (12a) Noppen (12c) tragen, die dazu bestimmt sind, ihre Verankerung durch Knöpfen durch die lichtdurchlässige Bahn (11a) hindurch sicherzustellen.

3. . Karosserieelement nach einem der vorhergehenden Ansprüche, **dadurch gekennzeichnet, dass** die Zwischenräume (10), die die Lichtstreuungszonen (11) bilden, aus Schlitzen bestehen.

4. . Karosserieelement nach einem der vorhergehenden Ansprüche, **dadurch gekennzeichnet, dass** die die Lichtstreuungsbereiche (11) bildenden Zwischenräume (10) jeweils mit einer gegenüberliegenden Lichtquelle versehen sind.

5. . Karosserieelement nach dem vorhergehenden Anspruch, **dadurch gekennzeichnet, dass** die Lichtquellen RGB-LEDs sind, die jeweils unabhängig voneinander von einem Mikroprozessor angesteuert werden, um eine Lichtsignatur zu erzeugen.

6. . Kraftfahrzeug, das mit mindestens einem Karosserieelement nach einem der vorhergehenden Ansprüche versehen ist.

## Claims

1. Motor vehicle bodywork element comprising a wall (1) comprising, on its first face, diffusion zones (11) diffusing the light emitted by at least one light source disposed opposite the first face, said wall (1) further comprising, on its second face, light occultation zones (12), said occultation zones (12) being separated by intercalated spaces (10) configured to allow the light emitted by said light source to diffuse said occultation zones (12) forming opaque blocks (12a), said light diffusion zones (11) being made from a translucent sheet (11a) forming the inner face of said wall (1), **characterized in that** said blocks (12a) forming the occultation zones (12) are connected by bridges (12b), said wall (1) being constituted by the assembly of the opaque blocks (12a) on the translucent sheet (11a)

2. Bodywork element according to the preceding claim, **characterized in that** the said opaque blocks (12a) bear spikes (12c) intended to ensure their anchoring by bonding through the translucent sheet (11a).

3. Bodywork element according to one of the preceding claims, **characterized in that** the interspaces (10) forming the light diffusion zones (11) are constituted by slots.

4. Bodywork element according to one of the preceding claims, **characterized in that** said interspaces (10) forming the diffusion zones (11) are each provided with a light source facing each other.

5. Bodywork element according to the preceding claim, **characterized in that** the light sources are RGB LEDs each controlled independently by a microprocessor so as to create a light signature.

6. Motor vehicle provided with at least one body element according to one of the preceding claims.
